# EUROPÄISCHE PATENTSCHRIFT

(11) **EP 3 717 796 B1**
(45) Veröffentlichungstag und Bekanntmachung des Hinweises auf die Patenterteilung: **01.12.2021**
(21) Anmeldenummer: 18768829.6
(22) Anmeldetag: 06.09.2018
(51) Int. Cl.: F16G 5/06, F16G 5/20

(54) **RIEMEN SOWIE RIEMENTRIEB**
BELT AND BELT DRIVE
COURROIE AINSI QUE TRANSMISSION PAR COURROIE

(30) Priorität: 28.11.2017 DE 102017221271
(43) Veröffentlichungstag der Anmeldung: 07.10.2020
(73) Patentinhaber: ContiTech Antriebssysteme GmbH, 30165 Hannover (DE)
(72) Erfinder: GÖSER, Hubert, 30419 Hannover (DE); KUCHARCZYK, Andre, 30419 Hannover (DE); QUASS, Jan-Henning, 30419 Hannover (DE)
(74) Vertreter: Continental Corporation
(86) Internationale Anmeldenummer: PCT/EP2018/073939
(87) Internationale Veröffentlichungsnummer: WO 2019/105617

(56) Entgegenhaltungen:
- BE-A- 493 899
- FR-A- 994 971
- US-A- 3 800 610
- US-A1- 2003 134 705

## Beschreibung

Die vorliegende Erfindung betrifft einen Riemen sowie einen Riementrieb.

Riemen sind grundsätzlich aus dem Stand der Technik bekannt. Unter einem Riemen wird ein Riemen als solches oder ein Tragmittel, insbesondere ein riemenartiges Tragmittel, verstanden. Somit kann ein Riemen beispielsweise von einem Gurtriemen oder einem Gurt gebildet sein. Riemen können beispielsweise als Keilriemen oder als Keilrippenriemen ausgestaltet sein. Um eine Zugkraft auf einen Keilriemen zu übertragen, wird die trapezförmige Lauffläche in Eingriff mit einer Antriebsriemenscheibe gebracht, so dass der Keilriemen die Antriebsriemenscheibe über einen bestimmten Umschlingungswinkel umschlingt. Dabei wirken zwischen dem Keilriemen und der Antriebsriemenscheibe Kräfte an der Kontaktfläche zwischen dem Keilriemen und der Antriebsriemenscheibe. Eine Antriebsriemenscheibe kann dabei einen kreiszylindrischen Auflageringabschnitt und zwei Bordscheiben aufweisen, die zu gegenüberliegenden Stirnseiten des Auflageringabschnitts angeordnet sind. Bei einer derartigen Ausgestaltung der Antriebsriemenscheibe wirken entsprechend hohe Wechselkräfte zwischen den Flanken des Keilriemens und den Bordscheiben sowie zwischen einer Auflageseite des Keilriemens und dem Auflageringabschnitt der Antriebsriemenscheibe. Durch die hohen Kräfte komprimiert sich das Riemenmaterial des Keilriemens, so dass der Keilriemen im Bereich der Umschlingung mit der Antriebsriemenscheibe in Querrichtung zur Riemenlängsrichtung gespreizt wird. Dadurch kommt es zu einer Verklemmung zwischen dem Keilriemen und der Antriebsriemenscheibe, was einer kraftschlüssigen Verbindung entspricht, die auch gewünscht ist, um die Übertragung von Antriebskräften auf den Keilriemen zu gewährleisten, wenn die Antriebsriemenscheibe rotatorisch angetrieben wird.

Für einen Riemen ist es jedoch nicht immer notwendig, dass es zu der Verklemmung zwischen dem Riemen und der Riemenscheibe bzw. der kraftschlüssigen Verbindung zwischen dem Riemen und der Riemenscheibe kommt. So kann es beispielsweise von Vorteil sein, wenn der Riemen mittels einer Riemenscheibe umgelenkt wird, ohne dass es zu der zuvor erläuterten Verklemmung kommt. Dies hätte den Vorteil, dass der Riemen mit einer besonders geringen Reibung umgelenkt werden kann, was den Verschleiß des Riemens und außerdem den Geräuschpegel beim Umlenken des Riemens deutlich verringern würde.

Ein besonders großer Abstand zwischen den Flanken eines Riemens und den Bordscheiben einer Riemenscheibe stellt jedoch nur eine unbefriedigende Lösung dar. Denn eine derartige Ausgestaltung ist nicht sehr kompakt. Vielmehr wird ein verhältnismäßig großer Bauraum beansprucht, um den gewünschten Effekt zu erreichen. Schließlich birgt diese Ausgestaltung außerdem die Gefahr, dass die Auflagefläche des Riemens verhältnismäßig verkleinert ist. Dadurch können nur kleinere Kräfte beim Umlenken an einer Riemenscheibe getragen werden.

Die US 2003/134705 A1 beschreibt einen Riemen, umfassend einen elastomeren Körper mit einem darin eingebetteten Zugelement und einer Riemenscheiben-Eingriffsfläche, wobei die Riemenscheiben-Eingriffsfläche eine Rippe aufweist, die sich in einer Längsrichtung erstreckt, und die Rippe eine Spitze aufweist, die eine konkave Oberfläche beschreibt, die zwischen im wesentlichen flachen Oberflächen angeordnet ist.

Die US 3,800,610 A beschreibt einen Riemen mit einer inneren Struktur, die von einer gummierten Gewebehülle umschlossen ist und eine innere Oberfläche aufweist, die eine Vielzahl von darin geformten, im wesentlichen gleichmäßig beabstandeten Querwellen aufweist, wobei die Wellen in der Längsmitte des Riemens eine Tiefe haben, die größer als die Dicke des Hüllenmaterials ist, und sich in die Seiten des Riemens bis zu einer Tiefe verjüngen, die mindestens gleich der Dicke des Hüllenmaterials ist.

Die FR 994 971 A beschreibt ein Verfahren zur Herstellung von Keilriemen, dadurch gekennzeichnet, daß zur Erhöhung der Flexibilität und zur Verringerung der Ermüdung und des Verschleißes, insbesondere beim Aufwickeln auf Riemenscheiben mit kleinem Durchmesser, der orthogonale massive V-förmige Querschnitt durch einen orthogonalen Querschnitt ersetzt wird, der schräge Flächen mit einem konkaven Profil oder mindestens eine der ausgesparten parallelen Flächen oder schräge Flächen mit einem konkaven Profil in Kombination mit Aussparungen aufweist, die auf einer oder beiden der parallelen Flächen vorgesehen sind.

Die BE 493 899 A beschreibt einen Keilriemen, bei dem zwei gegenüberliegende Seiten des Keilriemenabschnitts durch gebogene Segmente gebildet werden, die an jedem Ende durch gerade Segmente verlängert werden.

Der Erfindung liegt deshalb die Aufgabe zugrunde, die zuvor erläuterten Nachteile zu überwinden. Insbesondere liegt der Erfindung die Aufgabe zugrunde, einen Riemen bereitzustellen, der dazu geeignet ist, mittels einer üblichen Riemenscheibe umgelenkt zu werden, und wobei gleichzeitig die zuvor erläuterten Nachteile überwunden werden können.

Gemäß einem ersten Aspekt der Erfindung wird die zuvor erläuterte Aufgabe gelöst durch einen Riemen mit den Merkmalen des Anspruchs 1. Vorgeschlagen wird also ein Riemen, der mindestens eine in Riemenlängsrichtung ausgebildete Rippe aufweist, wobei jede Rippe einen trapezförmigen Querschnitt aufweist, so dass jede Rippe eine Auflageseite und zwei sich von der Auflageseite erstreckende Flanken aufweist. Außerdem ist der Riemen derart ausgebildet, dass jede Flanke nach innen gewölbt ausgebildet ist und dass jede Auflageseite nach innen gewölbt ausgebildet ist.

An dieser Stelle sei nochmals darauf hingewiesen, dass unter einem Riemen ein Riemen als solches oder ein Tragmittel, insbesondere ein riemenartiges Tragmittel, verstanden wird.

Unter einer nach innen gewölbten Flanke wird vorzugsweise eine konkav ausgebildete Flanke verstanden. Unter einer nach innen gewölbten Auflageseite wird vorzugsweise eine konkav ausgebildete Auflageseite verstanden. Außerdem ist es besonders bevorzugt vorgesehen, dass jede Auflageseite und jede Flanke sich in Riemenlängsrichtung erstreckt. Durch die Auflageseite und die beiden Flanken einer jeden Rippe kann der trapezförmige Querschnitt der jeweiligen Rippe gewährleistet werden.

Wird der Riemen von einer Riemenscheibe umgelenkt, so dass die Rippe die Riemenscheibe über einen Umschlingungswinkel umschlingt, so gewährleistet die Rippe und damit auch der Riemen, dass es zu einer deutlichen Reduzierung der Reibung an der Kontaktfläche zwischen der Rippe und der Riemenscheibe kommt. Wirkt der Riemen mit hohen Kräften in Radialrichtung auf die Riemenscheibe, kann es bei der Rippe ebenfalls zu einer Komprimierung kommen, so dass sich das Material bzw. Riemenmaterial am entsprechenden Bereich der Rippe, die die Riemenscheibe umschlingt, in Querrichtung nach außen spreizt. Außerdem kann es zu einer Komprimierung des Materials der Rippe kommen, so dass das Material in Richtung der Auflageseite gedrückt wird. Jede Flanke und/oder jede Auflageseite der mindestens einen Rippe des Riemens ist jedoch nach innen gewölbt ausgebildet. Kommt es nun zu dem zuvor erläuterten Spreiz-Effekt aufgrund der Komprimierung des Material der mindestens einen Rippe des Riemens, tritt die Klemmwirkung zwischen der mindestens einen Rippe des Riemens und der Riemenscheibe nicht auf oder allenfalls zu einem deutlich verringertem Anteil. Denn durch die nach innen ausgewölbten Flanken und/oder durch die nach innen gewölbte Auflageseite wird zwischen dem Riemen und der Riemenscheibe Raum geschaffen, in den sich das Material der mindestens einen Rippe ausbreiten kann, wenn es zu der zuvor erläuterten Komprimierung kommt. Durch die Verhinderung der Klemmwirkung bzw. aufgrund der deutlichen Reduzierung der Klemmwirkung wird der Verschleiß des Riemens deutlich verringert. Außerdem kann der Riemen mit einem deutlich geringeren Geräuschpegel umgelenkt werden.

Vorzugsweise ist der Riemen als ein umlaufend ausgebildeter Riemen ausgebildet. In diesem Fall kann jede Rippe ebenfalls umlaufend ausgebildet sein. Sofern der Riemen umlaufend ausgebildet ist, kann die Umlaufrichtung die Riemenlängsrichtung bestimmen und/oder sein. Der Riemen ist jedoch nicht notwendiger Weise umlaufend ausgebildet. So kann der Riemen beispielsweise zwei Enden aufweisen. In diesem Fall erstreckt sich der Riemen von einem Ende in Riemenlängsrichtung bis zu dem anderen Ende.

Eine vorteilhafte Ausgestaltung des Riemens zeichnet sich dadurch aus, dass der Riemen als Keilriemen mit genau einer Rippe ausgebildet ist. Die Rippe bezieht sich dabei vorzugsweise auf eine Rippe, wie sie zuvor erläutert wurde.

Eine weitere vorteilhafte Ausgestaltung des Riemens zeichnet sich dadurch aus, dass der Riemen mit mehreren Rippen als Rippenkeilriemen ausgebildet ist. Jede der Rippen kann nach Art einer Rippe ausgebildet sein, wie sie zuvor erläutert wurde. Die Rippen können parallel zueinander angeordnet sein, und sich jeweils in Riemenlängsrichtung erstrecken. Vorzugsweise ist jede Rippe gleich ausgebildet.

Eine vorteilhafte Ausgestaltung des Riemens zeichnet sich dadurch aus, dass die mindestens eine Rippe ein Rückenprofil an einer Rückseite des Riemens bildet, wobei der Riemen außerdem ein Antriebsprofil an einer Vorderseite des Riemens aufweist, die gegenüber zu der Rückseite des Riemens angeordnet ist. Diese Ausgestaltung bietet den Vorteil, dass der Riemen zwei sich in Riemenlängsrichtung erstreckende Profile, nämlich das Rückenprofil und das Antriebsprofil, aufweisen kann. Das Rückenprofil ist dabei an der Rückseite des Riemens angeordnet. Das Antriebsprofil ist an der Vorderseite des Riemens angeordnet. Das Antriebsprofil ist dabei bevorzugt zum Eingriff mit einer Antriebsriemenscheibe ausgebildet, so dass Antriebskräfte von der Antriebsriemenscheibe an das Antriebsprofil und sodann an den Riemen übertragbar sind. Das Rückenprofil ist vorzugsweise dazu ausgebildet, um von einer Umlenkriemenscheibe umgelenkt zu werden, ohne dass Kräfte in Umfangsrichtung der Umlenkriemenscheibe auf das Rückenprofil übertragen werden. Die zuvor erläuterte, mindestens eine Rippe bildet dabei vorzugsweise das Rückenprofil des Riemens. Das Antriebsprofil des Riemens kann ebenfalls rippenartig oder keilartig ausgebildet sein. Zur Unterscheidung wird deshalb die Bezeichnung Antriebsrippe eingeführt. Das Antriebsprofil kann von mindestens einer Antriebrippe gebildet sein. Grundsätzlich ist es jedoch auch möglich, dass mehrere Antriebsrippen vorgesehen sind, die das Antriebsprofil bilden. In diesem Fall kann das Antriebsprofil rippenkeilförmig ausgebildet sein. Ist nur eine Antriebsrippe für das Antriebsprofil vorgesehen, kann dieses somit keilförmig ausgebildet sein. Außerdem ist bevorzugt vorgesehen, dass jede Antriebsrippe trapezförmig gebildet ist. Dabei sind die Flanken und/oder die Auflagefläche einer jeden Antriebsrippe nicht nach innen gewölbt. Vielmehr kann jede Flanke und/oder jede Auflageseite zumindest im Wesentlichen eben ausgebildet sein. Umschlingt das Antriebsprofil eine Antriebsriemenscheibe, kann es zu der gewünschten Klemmwirkung zwischen dem Antriebsprofil und dem Auflageriemenabschnitt sowie den Bordscheiben der Antriebsriemenscheibe kommen, um die kraftschlüssige Verbindung zwischen dem Antriebsprofil und der Antriebsriemenscheibe zu gewährleisten. Dadurch können Antriebskräfte von der Antriebsriemenscheibe auf das Antriebsprofil übertragen werden. Wird der Riemen im weiteren Verlauf an der Rückseite umgelenkt, kann das Rückenprofil eine weitere Riemenscheibe über einen Umschlingungswinkel umschlingen, wobei hier die Klemmwirkung zumindest im Wesentlichen verhindert wird, was zu einer entsprechend geringen Reibung und deshalb auch zu einem besonders geringen Verschleiß des Rückenprofil führt. Außerdem kann der Geräuschpegel beim Umlenken an der Umlenkriemenscheibe besonders klein gehalten werden.

Um eine besonders wirkungsvolle Klemmwirkung zwischen dem Antriebsprofil und einer Antriebsprofilriemenscheibe zu gewährleisten, kann es besonders bevorzugt vorgesehen sein, dass jede Flanke und/oder jede Auflageseite einer Antriebsrippe nach außen gewölbt ausgebildet ist. Dadurch wird eine besonders gute kraftschlüssige Verbindung zwischen dem Antriebsprofil und der Antriebsriemenscheibe geschaffen, wenn das Antriebsprofil die Antriebsriemenscheibe über einen Umschlingungswinkel umschlingt.

Wenn im Folgenden vorteilhafte Ausgestaltungen einer Rippe, Merkmale einer Rippe und/oder Vorteile einer Rippe erläutert werden, so ist damit vorzugsweise die Rippe gemäß dem ersten Aspekt des Riemens und/oder die mindestens eine Rippe des Rückenprofils gemeint. Entsprechendes gilt insbesondere für die Flanken und die Auflagenseite dieser Rippe. Sofern die Antriebsrippe des Antriebsprofils erörtert wird, so wird die entsprechende Antriebsrippe auch als solche bezeichnet. Die weiteren vorteilhaften Ausgestaltungen, Merkmale und/oder Vorteile einer Flanke und/oder einer Auflageseite einer Rippe beziehen sich deshalb auch auf die mindestens eine Rippe gemäß dem ersten Aspekt des Riemens bzw. die mindestens eine Rippe des Rückenprofils.

Eine vorteilhafte Ausgestaltung des Riemens zeichnet sich dadurch aus, dass jede Flanke eine maximale Wölbungstiefe, die als Flankenwölbungstiefe bezeichnet wird, von mindestens 0,05 mm bis maximal 2 mm aufweist. Die Wölbungstiefe kann auch als Sehnenhöhe bezeichnet sein. Im Weiteren wird jedoch der Begriff Flankenwölbungstiefe verwendet. Die Flankenwölbungstiefe jeder Flanke einer jeden Rippe ist vorzugsweise der direkte Abstand zwischen einer Auflagefläche der jeweiligen Flanke und einer Sehne, also einer gedachten Linie, die sich von der auflageseitigen Kante der jeweiligen Rippe zu der Rücken- oder basisseitigen Kante der jeweiligen Rippe erstreckt. Dabei ist der Abstand vorzugsweise senkrecht zur Sehne gemessen. Vorzugsweise ist die Flankenwölbungstiefe zwischen 0,05 mm und 1 mm, insbesondere sofern der Riemen zur Anwendung mit einer Riemenscheibe ausgebildet ist, die einen Scheibendurchmesser zwischen 80 mm und 150 mm aufweist. Außerdem kann es bevorzugt vorgesehen sein, dass die Flankenwölbungstiefe zwischen 0,3 mm und 2 mm ist, insbesondere sofern der Riemen zur Anwendung mit einer Riemenscheibe ausgebildet ist, die einen Scheibendurchmesser von mindestens 200 mm aufweist.

Eine weitere vorteilhafte Ausgestaltung des Riemens zeichnet sich dadurch aus, dass jede Auflageseite einer jeden Rippe eine maximale Wölbungstiefe, die als Auflagewölbungstiefe bezeichnet wird, von mindestens 0,05 mm und maximal 2 mm aufweist. Die Wölbungstiefe kann auch als Auflagesehnenhöhe bezeichnet werden. Im Weiteren wird jedoch der Begriff Auflagewölbungstiefe verwendet. Die Auflagewölbungstiefe der Auflageseite einer jeden Rippe ist vorzugsweise der direkte Abstand zwischen der jeweiligen Auflagefläche der Auflageseite und einer Sehne, also einer gedachten Linie, die sich in Querrichtung zwischen den flankenseitigen Kanten der Auflagefläche erstreckt. Der direkte Abstand wird dabei vorzugsweise senkrecht zur Sehne gemessen. Vorzugsweise ist die Auflagewölbungstiefe zwischen 0,05 mm und 1 mm, insbesondere sofern der Riemen zur Anwendung mit einer Riemenscheibe ausgebildet ist, die einen Scheibendurchmesser zwischen 80 mm und 150 mm aufweist. Außerdem hat es sich als vorteilhaft erwiesen, wenn die Auflagewölbungstiefe zwischen 0,3 mm und 2 mm ist, insbesondere sofern der Riemen zur Anwendung mit einer Riemenscheibe ausgebildet ist, die einen Scheibendurchmesser von mindestens 200 mm aufweist.

Eine weitere vorteilhafte Ausgestaltung des Riemens zeichnet sich dadurch aus, dass für die Flankenwölbungstiefe und die Auflagewölbungstiefe einer jeden Rippe, insbesondere gemeinsamen Rippe, zumindest im Wesentlichen gleich ist. Dadurch kann gewährleistet werden, dass zunächst die beiden gegenüberliegenden Flanken in gleicher Weise ausgebildet sind. Insbesondere ist es vorgesehen, dass die Flanken einer gemeinsamen Rippe symmetrisch ausgebildet sind. Wenn außerdem die Flankenwölbungstiefe zu der Auflagewölbungstiefe korrespondiert, kann sich das Riemenmaterial im Bereich einer gemeinsamen Rippe in Richtung der Flanken sowie in Richtung der Auflageseite gleichmäßig ausdehnen. Dies gewährleiste eine besonders geringe Reibung, wenn der Riemen um eine Riemenscheibe umgelenkt wird.

Eine weitere vorteilhafte Ausgestaltung des Riemens zeichnet sich dadurch aus, dass die Wölbung einer jeden Flanke einen Biegeradius, der als Flankenbiegeradius bezeichnet ist, um eine Achse parallel zur Riemenlängsrichtung des Riemens zwischen 1 und 300, insbesondere zwischen 2 und 10, aufweist. Indem der Flankenbiegeradius zwischen R1a und R1b ausgebildet ist, wird einerseits ausreichend Raum zum Ausdehnen des Materials der jeweiligen Rippe zur Verfügung gestellt und andererseits bleibt die Formstabilität der jeweiligen Rippe zumindest im Wesentlichen erhalten, so dass besonders hohe Zug- und Druckkräfte auf die jeweilige Rippe ausgeübt werden können.

Eine weitere vorteilhafte Ausgestaltung des Riemens zeichnet sich dadurch aus, dass das Verhältnis von einer Höhe jeder Flanke einer Rippe zu dem jeweiligen Flankenbiegeradius zwischen 0, 1 und 2 ist. Dieses Verhältnis wird auch als Flankenverhältnis bezeichnet. Vorzugsweise ist das Flankenverhältnis zwischen 0,1 und 1, insbesondere sofern der Riemen zur Anwendung mit einer Riemenscheibe ausgebildet ist, die einen Scheibendurchmesser zwischen 80 mm und 150 mm aufweist. Es hat sich ebenfalls als vorteilhaft herausgestellt, wenn das Flankenverhältnis zwischen 0,3 und 2 ist, insbesondere sofern der Riemen zur Anwendung mit einer Riemenscheibe ausgebildet ist, die einen Scheibendurchmesser von mindestens 200 mm aufweist. Durch die zuvor genannten Angaben in Bezug auf das Flankenverhältnis kann vorteilhaft gewährleistet werden, dass mittels des Riemens besonders hohe Zugkräfte und/oder Auflagekräfte übertragbar sind und zugleich eine kompakte Bauform gewährleistet werden kann, die beim Zusammenwirken mit einer Riemenscheibe darüber hinaus eine besonders geringe Reibung gewährleistet.

Eine weitere vorteilhafte Ausgestaltung des Riemens zeichnet sich dadurch aus, dass die Wölbung einer jeden Auflageseite der jeweiligen Rippe einen Biegeradius, der als Auflagebiegeradius bezeichnet ist, um eine Achse parallel zur Riemenlängsrichtung des Riemens zwischen 1 und 300, insbesondere zwischen 2 und 10, aufweist. Durch die geeignete Wahl der Auflagebiegeradien wird einerseits gewährleistet, dass die Auflageseite einer Rippe auf dem Auflageringabschnitt einer Riemenscheibe aufliegt, wenn der Riemen mit einer entsprechend hohen Zugkraft belastet ist. Denn in diesem Fall wird das Material der Rippe komprimiert, so dass die Auflageseite über den Umschlingungswinkel an der Riemenscheibe anliegen kann. Andererseits ist der Auflagebiegeradius auch derart wählbar oder gewählt, dass es nicht zur Auswölbung nach außen an der Auflageseite kommt. Damit kann die Reibung zwischen dem Riemen und der Riemenscheibe besonders gering gehalten werden, was einerseits den Verschleiß des Riemens verringert und andererseits den Geräuschpegel beim Umlenken des Riemens besonders klein hält.

Eine weitere vorteilhafte Ausgestaltung des Riemens zeichnet sich dadurch aus, dass das Verhältnis von einer Breite der Auflageseite einer jeden Rippe zu dem jeweiligen Auflagebiegeradius zwischen 0, 1 und 2 ist. Dieses Verhältnis wird auch als Auflageverhältnis bezeichnet. Vorzugsweise ist das Auflageverhältnis zwischen 0,1 und 1, insbesondere sofern der Riemen zur Anwendung mit einer Riemenscheibe ausgebildet ist, die einen Scheibendurchmesser zwischen 80 mm und 150 mm aufweist. Außerdem hat es sich in der Praxis als vorteilhaft erwiesen, wenn das Auflageverhältnis zwischen 0,3 und 2 ist, insbesondere sofern der Riemen zur Anwendung in einer Riemenscheibe ausgebildet ist, die einen Scheibendurchmesser von mindestens 200 mm aufweist.

Eine weitere vorteilhafte Ausgestaltung des Riemens zeichnet sich dadurch aus, dass jede Rippe als gezahnte Rippe ausgebildet ist. Somit ist es bevorzugt vorgesehen, dass jede Rippe in Riemenlängsrichtung nicht ununterbrochen ausgebildet ist. Vielmehr kann die Rippe eine Vielzahl von sich jeweils nacheinander in Riemenlängsrichtung erstreckenden Abschnitten aufweisen, die voneinander beabstandet sind. Diese einzelnen Abschnitte werden auch als Zähne bezeichnet. Durch die Zähne kann die Biegesteifigkeit des Riemens herabgesetzt werden.

Eine vorteilhafte Ausgestaltung des Riemens zeichnet sich dadurch aus, dass bei jeder gezahnten Rippe Keilnuten durch die Zähne der Rippe gebildet sind, wobei die Keilnuten senkrecht oder schräg zur Riemenlängsrichtung des Riemens ausgebildet sind. Durch die Keilnuten sind die einzelnen Zähne der Rippe voneinander getrennt. Die Zähne der jeweiligen Rippe sind in Riemenlängsrichtung hintereinander angeordnet. Der Abstand zwischen den Keilnuten kann gleichmäßig sein. Es kann jedoch auch vorgesehen sein, dass der Abstand der Keilnuten in Riemenlängsrichtung unregelmäßig oder von Keilnut zu Keilnut ungleichmäßig ausgebildet ist.

Gemäß einem zweiten Aspekt der Erfindung wird die eingangs genannte Aufgabe gelöst durch einen Riementrieb, der einen Riemen nach einem der zuvor erläuterten Ausgestaltungen oder nach dem ersten Aspekt der Erfindung aufweist. Außerdem weist der Riementrieb eine Riemenscheibe auf, die teilweise von dem Riemen umschlungen ist. Die Riemenscheibe weist einen kreiszylindrischen Auflageabschnitt auf, der einen konstanten Durchmesser aufweist. Der Abschnitt des Riemens, der die Riemenscheibe umschlingt, liegt auf dem Auflageringabschnitt der Riemenscheibe auf.

Eine vorteilhafte Ausgestaltung des Riementriebs zeichnet sich dadurch aus, dass die Riemenscheibe zwei Bordscheiben aufweist. Die Bordscheiben sind zu gegenüberliegenden Stirnseiten des Auflageringabschnitts angeordnet, so dass jede Bordscheibe eine scheibenförmige Begrenzungsfläche bildet, wobei jede der Begrenzungsflächen senkrecht oder mit einer konstanten Schrägung zur Drehaxialrichtung der Antriebsscheibe ausgebildet ist. Dabei ist es bevorzugt vorgesehen, dass der Abschnitt des Riemens, der die Riemenscheibe umschlingt, derart mit der Riemenscheibe im Eingriff ist, so dass die Flanken des Riemens an den Begrenzungsflächen der Bordscheiben anliegen. Die Bordscheiben sind vorzugsweise nicht gewölbt ausgebildet. Somit bildet sich ein Raum zwischen den gewölbt ausgebildeten Flanken des Riemens und den Bordscheiben. Dieser Raum kann jedoch gefüllt sein, wenn der Riemen mit einer ausreichend hohen Zugkraft und/oder Kraft in Radialrichtung der Riemenscheibe belastet ist. Dennoch ruft der Eingriff des Riemens beim Umschlingen der Riemenscheibe eine besonders geringe Reibung hervor, da die Flanken allenfalls mit einer geringen Kraft an den Bordscheiben anliegen. Hierdurch wird auch der Geräuschpegel beim Umlenken besonders gering gehalten.

Weitere Merkmale, Vorteile und Anwendungsmöglichkeiten der vorliegenden Erfindung ergeben sich aus der nachfolgenden Beschreibung der Ausführungsbeispiele und/oder den Figuren. Dabei bilden alle beschriebenen und/oder bildlich dargestellten Merkmale für sich und/oder in beliebiger Kombination den Gegenstand der Erfindung auch unabhängig von ihrer Zusammensetzung in den einzelnen Ansprüchen und/oder deren Rückbezügen. In den Figuren stehen weiterhin gleiche Bezugszeichen für gleiche oder ähnliche Objekte.
- Fig. 1: zeigt eine erste Ausgestaltung des Riemens in einer schematischen Querschnittsansicht.
- Fig. 2: zeigt eine weitere Ausgestaltung des Riemens in einer schematischen Querschnittsansicht.
- Fig. 3: zeigt eine weite Ausgestaltung des Riemens in einer schematischen Querschnittsansicht.
- Fig. 4 - 9: zeigen jeweils unterschiedliche Ausgestaltungen des Riemens in schematischen Perspektivansichten.

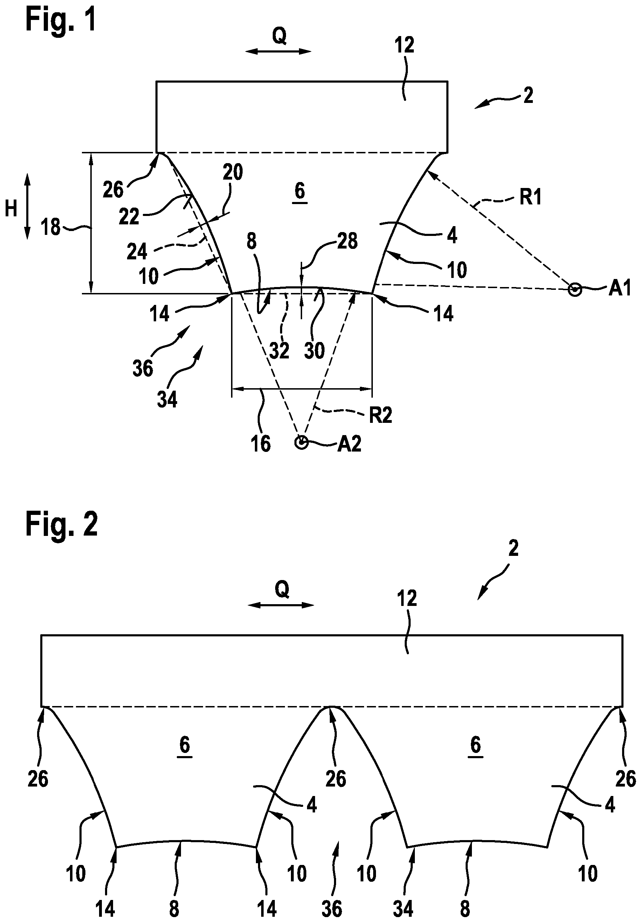

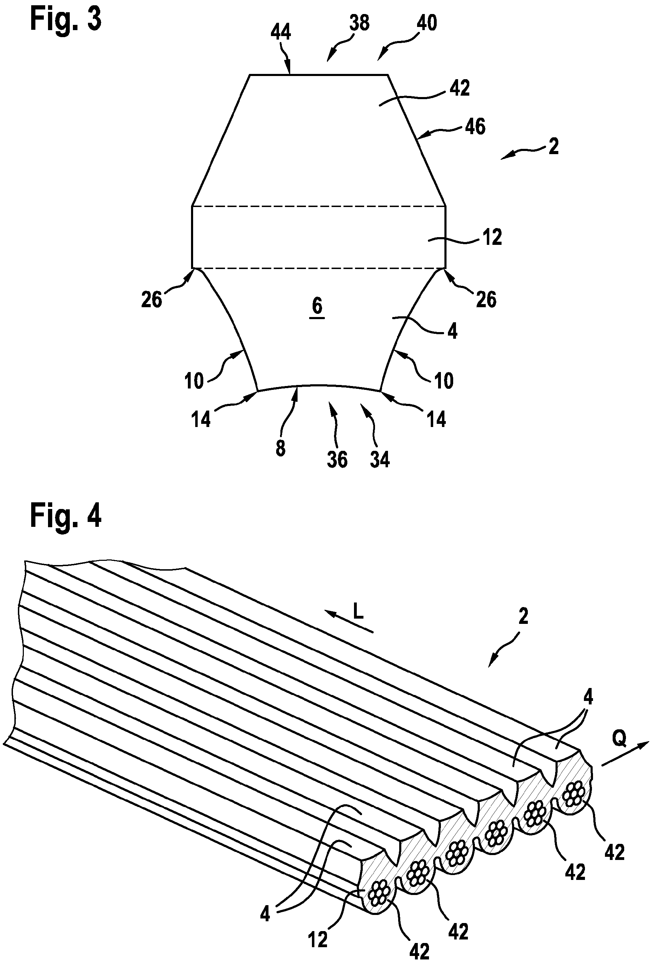

In der Figur 1 ist ein Riemen 2 in einer schematischen Querschnittsansicht gezeigt. Der Riemen 2 weist mindestens eine Rippe 4 auf, die im Weiteren als erste Rippe 4 bezeichnet wird. Die erste Rippe 4 erstreckt sich in Riemenlängsrichtung. Dies ist beispielsweise aus der Figur 4 zu entnehmen. Jede erste Rippe 4 weist einen zumindest im Wesentlichen trapezförmigen Querschnitt 6 auf. Durch die trapezförmige Querschnittsform weist jede erste Rippe 4 deshalb eine Auflageseite 8 und zwei sich von der Auflageseite 8 erstreckende Flanken 10 auf. Die Auflageseite 8 der ersten Rippe 4 erstreckt sich ebenfalls in Riemenlängsrichtung L. Auch jede der Flanken 10 der ersten Rippe 4 erstreckt sich in Riemenlängsrichtung L. Vorzugsweise ist der trapezförmige Querschnitt 6 einer jeden ersten Rippe 4 symmetrisch in Bezug auf die Flanken 10 ausgebildet. So können die Flanken 10 einer jeden ersten Rippe 4 symmetrisch zueinander angeordnet sein. Außerdem ist es bevorzugt vorgesehen, dass jede Flanke 10 einer jeden ersten Rippe 4 nach innen gewölbt ausgebildet ist. Mit anderen Worten kann jede Flanke 10 einer jeden ersten Rippe 4 konkav ausgebildet sein. Jede Flanke 10 kann auch als Flankenseite 10 bezeichnet sein. Somit kann jede Flankenseite 10 als eine konkave Flankenseite 10 ausgebildet sein. Es ist bevorzugt vorgesehen, dass jede Auflageseite 8 einer jeden ersten Rippe 4 nach innen gewölbt ausgebildet ist. Mit anderen Worten kann es vorgesehen sein, dass jede Auflageseite 8 einer jeden ersten Rippe 4 konkav ausgebildet ist. Die Auflageseite 8 kann deshalb als konkave Auflageseite 8 bezeichnet sein.

Umschlingt der Riemen 2 eine Riemenscheibe über einen bestimmten Umschlingungswinkel, so dass der Riemen 2 entsprechend um die Riemenscheibe gebogen wird, komprimiert sich das Riemenmaterial einer jeden ersten Rippe 4 und spreizt sich deshalb beispielsweise in Querrichtung Q nach außen. Mit anderen Worten kann jede Rippe 4 beim Umschlingen einer Riemenscheibe an den entsprechenden gebogenen Abschnitt breiter werden. Dadurch kann es grundsätzlich bei bekannten Riemen zu einer Verklemmung zwischen dem entsprechenden Abschnitt des Riemens und der Riemenscheibe kommen.

Bei dem Riemen 2, wie dieser im Querschnitt und schematisch in der Figur 1 dargestellt ist, kann dieses Verklemmen jedoch effektiv verhindert oder zumindest wesentlich verringert werden. Denn insbesondere die Flanken 10 sind nach innen gewölbt bzw. konkav ausgebildet. Kommt es nun zu der Spreizung des Materials im Rippenbereich, kann die konkave bzw. nach innen gewölbte Ausgestaltung einer jeden Flanke 10 zwar durch das sich nach außen spreizende Riemenmaterial aufgehoben werden, jedoch ist es bevorzugt vorgesehen, dass die Wölbung bzw. konkave Ausgestaltung derart ausgebildet ist, dass sich jede der Flanken 10 nicht bis zum Verklemmen nach außen wölbt. Dadurch wird die seitliche Reibwirkung mit der Riemenscheibe entsprechend verhindert oder zumindest auf einen sehr kleinen Teil verringert. Hieraus resultiert, dass der Verschleiß des Riemens zumindest in dem Bereich der mindestens einen ersten Rippe 4 deutlich sinkt. Außerdem kann der Geräuschpegel beim Umlenken an der Riemenscheibe deutlich verringert werden.

Es hat sich also als vorteilhaft herausgestellt, wenn jede Auflageseite 8 einer jeden ersten Rippe 4 nach innen gewölbt bzw. konkav ausgebildet ist. Wie zuvor erläutert, kann es beim Umschlingen einer Riemenscheibe dazu kommen, dass das Riemenmaterial im Bereich einer jeden ersten Rippe 4 komprimiert wird. Dies kann auch dazu führen, dass das Riemenmaterial in Richtung der Auflageseite 8 gedrückt wird. Dies kann sodann dazu führen, dass die nach innen gewölbte Ausgestaltung der Auflageseite 8 bzw. die konkave Ausgestaltung der Auflageseite 8 aufgehoben wird. Jedoch ist es bevorzugt vorgesehen, dass jede Auflageseite 8 einer jeden ersten Rippe 4 derart ausgestaltet ist, dass selbst beim Umlenken an der Riemenscheibe effektiv verhindert wird, dass sich die Auflageseite 8 nach außen wölbt. Daraus resultiert, dass jede Auflageseite 8 einer jeden ersten Rippe 4 besonders gut auf einem ringförmigen und/oder kreiszylindrischen Auflageringabschnitt der Riemenscheibe aufliegen kann, wenn der Riemen 2 an der Riemenscheibe umgelenkt wird. Dies reduziert den Verschließ des Riemens 2.

Unter Berücksichtigung der zuvor erläuterten Vorteile kann der Riemen 2 deshalb mit einem besonders geringen Geräuschpegel an einer Riemenscheibe umgelenkt werden, wobei der Riemen 2 außerdem einem besonders geringen Verschleiß unterliegt und deshalb eine besonders hohe Lebensdauer hat.

Wie es aus der Figur 1 schematisch zu entnehmen ist, ist es vorgesehen, dass der Riemen 2 einen Grundkörperabschnitt 12 aufweist. Von diesem Grundkörperabschnitt 12 erstreckt sich die bzw. jede erste Rippe 4 in einer Höhenrichtung H. Die Höhenrichtung H ist bevorzugt senkrecht zur Querrichtung Q und ebenfalls senkrecht zur Riemenlängsrichtung L. Jede Rippe 4 ist außerdem bevorzugt derart ausgebildet, dass die Auflageseite 8 von dem Grundkörperabschnitt 12 abgewandt ist. Jede der Flanken 10 einer jeden ersten Rippe 4 erstreckt sich von einer querseitigen Kante 14 bis zu dem Grundkörperabschnitt 12, so dass die jeweilige erste Rippe 4 den gewünschten trapezförmigen Querschnitt 6 aufweist. Jede Auflageseite 8 weist eine Auflagenbreite 16 auf. Damit ist die Breite in Querrichtung Q gemeint, die zu der Auflagenseite 8 korrespondiert. Jede der Flanken 10 weist eine Flankenhöhe 18 in Höhenrichtung H auf.

In der Figur 1 ist der Riemen 2 in einer vorteilhaften Ausgestaltung mit genau einer ersten Rippe 4 dargestellt. Dieser Riemen 2 wird deshalb auch als Keilriemen bezeichnet bzw. ist als ein Keilriemen ausgebildet.

In der Figur 2 ist eine weitere Ausgestaltung des Riemens 2 in einer schematischen Querschnittsansicht gezeigt. Der Riemen 2 weist ebenfalls einen Grundkörperabschnitt 12 auf. Allerdings weist der Riemen 2 nicht nur eine erste Rippe 4, sondern zwei erste Rippen 4 auf. Jede der beiden ersten Rippen 4 ragt in die gleiche Höhenrichtung H von dem Grundkörperabschnitt 12 weg. Außerdem sind die beiden ersten Rippen 4 parallel zueinander angeordnet. Besonders bevorzugt ist jede der beiden Rippen 4 gleich ausgebildet. Auf die vorangegangenen Erläuterungen zu der ersten Rippe 4 wird deshalb für jede der beiden ersten Rippen 4 in analoger Weise Bezug genommen. Grundsätzlich können für den Riemen 2 noch weitere erste Rippen 4 vorgesehen sein. So kann der Riemen 2 beispielsweise zwei, drei, vier und/oder noch weitere erste Rippen 4 aufweisen. Der Riemen 2 mit mehreren ersten Rippen 4 wird als Rippenkeilriemen bezeichnet und/oder ist als Rippenkeilriemen ausgebildet.

Wenn im Weiteren auf bevorzugte Ausgestaltungen der ersten Rippe 4, insbesondere in Bezug auf Figur 1, erläutert werden, ist dies nicht auf einen Riemen 2 mit genau einer ersten Rippe 4 beschränkt. Vielmehr sollen die Erläuterungen in Bezug auf die erste Rippe 4 für jede erste Rippe 4 eines Riemens 2, zumindest in analoger Weise, gelten können.

In der Praxis hat es sich als vorteilhaft erwiesen, wenn jede Flanke 10 eine vorbestimmte, maximale Wölbungstiefe 20, die auch als Flankenwölbungstiefe 20 bezeichnet wird, aufweist. Die Flankenwölbungstiefe 20 kann dabei durch konstruktive Maßnahmen und/oder durch den jeweiligen Einsatzzweck des Riemens 2 ermittelt und/oder vorbestimmt sein. Die Flankenwölbungstiefe 20 einer Flanke 10 einer ersten Rippe 4 ist dabei vorzugsweise der direkte Abstand zwischen der Auflagefläche 22 der jeweiligen Flanke 10 und einer Sehne 24, die von einer gedachten Linie repräsentiert wird, die sich von der auflagenseitigen Kante 14 der jeweiligen ersten Rippe 4 zu der grundkörperseitigen Kante 26 der jeweiligen ersten Rippe 4 erstreckt. Der direkte Abstand bzw. die Flankenwölbungstiefe 20 wird dabei bevorzugt senkrecht zu der Sehne 24 ermittelt.

Wird der Riemen 2 beispielsweise um eine Riemenscheibe mit einem Scheibendurchmesser zwischen 80 mm und 150 mm umgelenkt, so hat es sich als vorteilhaft erwiesen, wenn die Flankenwölbungstiefe 20 beispielsweise zwischen 0,05 mm und 1 mm ist. Wird der Riemen 2 hingegen an einer Riemenscheibe mit einem Scheibendurchmesser von mindestens 150 mm umgelenkt, so hat es sich als vorteilhaft erwiesen, wenn die Flankenwölbungstiefe 20 beispielsweise zwischen 0,1 mm und 3 mm, insbesondere zwischen 0,3 mm und 2 mm, ist.

Außerdem hat es sich als vorteilhaft erwiesen, wenn die Wölbung einer jeden Flanke 10 einer jeden ersten Rippe 4 einen vorbestimmten Biegeradius R1, der auch als Flankenbiegeradius R1 bezeichnet ist, um eine Achse A1 parallel zur Riemenlängsrichtung L des Riemens 2 aufweist. Vorzugsweise ist der Flankenbiegeradius R1 zwischen 1 cm und 20 cm. Damit kann besonders effektiv gewährleistet werden, dass die eingangs genannte Verklemmung verhindert oder deutlich reduziert ist. Außerdem gewährleistet ein entsprechender Flankenbiegeradius R1, dass der Riemen 2 mit einem besonders geringen Geräuschpegel und/oder mit einer besonders geringen Reibung umgelenkt werden kann.

Außerdem hat es sich als vorteilhaft erwiesen, wenn jede Flanke 10 einer jeden ersten Rippe 4 kontinuierlich und/oder stetig nach innen gewölbt ist, so dass die jeweilige Flanke 10 einen zumindest im Wesentlichen konstanten Flankenbiegeradius R1 aufweist. Dadurch kann die zugehörige erste Rippe 4 besonders symmetrisch ausgestaltet sein, was eine gleichmäßige Kraftverteilung innerhalb der jeweiligen ersten Rippe 4 ermöglicht.

Es ist bevorzugt vorgesehen, dass ein Verhältnis, das auch als Flankenverhältnis bezeichnet ist, von der Flankenhöhe 18 zu dem Flankenbiegeradius R1 zwischen 0,1 und 2 ist. Mit anderen Worten kann es vorgesehen sein, dass der Flankenbiegeradius R1 an die Flankenhöhe 18 angepasst ist oder umgekehrt. In der Praxis hat es sich als vorteilhaft erwiesen, wenn das Flankenverhältnis zwischen 0,1 und 1 ist, insbesondere wenn der Riemen 2 zur Anwendung mit einer Riemenscheibe ausgebildet ist, die einen Scheibendurchmesser zwischen 80 mm und 150 mm aufweist. Weist die Riemenscheibe einen größeren Scheibendurchmesser, also einen Scheibendurchmesser von mehr als 150 mm auf, so ist es von Vorteil, wenn das Flankenverhältnis zwischen 0,3 und 2 ist.

Weiterhin hat es sich als vorteilhaft erwiesen, wenn jede Auflageseite 8 einer jeden ersten Rippe 4 eine vorbestimmte, maximale Wölbungstiefe 28, die auch als vorbestimmte, maximale Auflagewölbungstiefe 28 bezeichnet wird, aufweist. Die Auflagewölbungstiefe 28 der Auflageseite 8 einer jeden ersten Rippe 4 ist vorzugsweise der direkte Abstand zwischen der Auflagefläche 30 der jeweiligen Auflageseite 8 und einer (weiteren) Sehne 32, also vorzugsweise einer gedachten Linie, die sich in Querrichtung Q zwischen den flankenseitigen Kanten 14 der Auflageseite 8 erstreckt. Der direkte Abstand bzw. die Auflagewölbungstiefe 28 wird vorzugsweise senkrecht zur Sehne 32 gemessen. In der Praxis ist die Auflagewölbungstiefe 28 bzw. die maximale Wölbungstiefe 28 durch konstruktive Eigenschaften des Riemens 2 und/oder durch den Einsatzzweck des Riemens 2 vorbestimmt. Es hat sich als vorteilhaft herausgestellt, wenn die Auflagewölbungstiefe 28 beispielsweise zwischen 0,05 mm und 2 mm ist. Besonders bevorzugt ist die Auflagewölbungstiefe 28 zwischen 0,05 mm und 1 mm, insbesondere sofern der Riemen 2 zur Anwendung mit einer Riemenscheibe ausgebildet ist, die einen Scheibendurchmesser zwischen 80 mm und 150 mm aufweist. Ist der Scheibendurchmesser der Riemenscheibe größer als 150 mm, beispielsweise mindestens 200 mm, so hat es sich als vorteilhaft erwiesen, wenn die Auflagewölbungstiefe 28 zwischen 0,3 mm und 2 mm ist.

Darüber hinaus hat es sich als vorteilhaft herausgestellt, wenn die Wölbung einer jeden Auflageseite 8, bzw. die Auflageseite 8 einer jeden ersten Rippe 4, einen Biegeradius R2, der auch als Auflagebiegeradius R2 bezeichnet ist, um eine Achse A2 parallel zur Riemenlängsrichtung L des Riemens 2 aufweist. Der Auflagebiegeradius R2 ist dabei bevorzugt vorbestimmt. Als Vorteilhaft hat sich in der Praxis herausgestellt, wenn der Auflagebiegeradius R2 zwischen 1 cm und 20 cm ist. Außerdem kann der Auflagebiegeradius R2 durch konstruktive Eigenschaften und/oder durch den Einsatzzweck des Riemens 2 vorbestimmt sein.

Darüber hinaus kann sich der Auflagebiegeradius R2 insbesondere nach der Breite 16 der Auflageseite 8 richten. Es ist deshalb bevorzugt vorgesehen, dass das Verhältnis, das auch als Auflageverhältnis bezeichnet ist, von einer Breite 16 der Auflageseite 8 zu dem Auflagebiegeradius R2 zwischen 0, 1 und 2 ist. Grundsätzlich können auch andere Werte für das Auflageverhältnis vorgesehen sein. In diesem Fall ist es besonders bevorzugt vorgesehen, wenn der Bereich bzw. der Wert des Auflageverhältnisses vorbestimmt ist. So hat es sich in der Praxis als vorteilhaft erwiesen, wenn das Auflageverhältnis zwischen 0,1 und 1 ist, insbesondere sofern der Riemen 2 zur Anwendung mit einer Riemenscheibe ausgebildet ist, die einen Scheibendurchmesser zwischen 80 mm und 150 mm aufweist. Weist die Riemenscheibe hingegen einen größeren Scheibendurchmesser als 150 mm auf, beispielsweise mindestens 200 mm, so ist es von Vorteil, wenn das Auflageverhältnis zwischen 0,3 und 2 ist.

Um eine ungleichmäßige Belastung einer jeden ersten Rippe 4, insbesondere beim Umlenken um eine Riemenscheibe, zu vermeiden, ist es von Vorteil, wenn jede erste Rippe 4 insbesondere im Hinblick auf die zugehörigen Flanken 10 symmetrisch ausgebildet ist. Eine vorteilhafte Ausgestaltung des Riemens 2 zeichnet sich deshalb dadurch aus, dass die Flankenwölbungstiefe 20 jeder Flanke 10 der gleichen, ersten Rippe 4 gleich oder zumindest im Wesentlichen gleich ist. Außerdem hat es sich als vorteilhaft herausgestellt, wenn die Flankenwölbungstiefe 20 und die Auflagewölbungstiefe 28 einer gemeinsamen, ersten Rippe 4 gleich oder zumindest im Wesentlichen gleich sind. Schließlich ist es von Vorteil, wenn der Flankenbiegeradius R1 der beiden Flanken 10 der gleichen ersten Rippe 4 gleich oder zumindest im Wesentlichen gleich ist. Darüber hinaus hat es sich als vorteilhaft erwiesen, wenn der Flankenbiegeradius R1 der beiden Flanken 10 und der Auflagebiegeradius R2 der Auflageseite 8 der gemeinsamen, ersten Rippe 4 gleich oder zumindest im Wesentlichen gleich sind.

Eine weitere Ausgestaltung des Riemens 2 ist in der Figur 3 in einer schematischen Querschnittsansicht gezeigt. Auf die vorangegangenen Erläuterungen des Riemens 2 wird für diese Ausgestaltung des Riemens 2 zumindest in analoger Weise Bezug genommen.

Für den in Figur 3 exemplarisch dargestellten Riemen 2 ist es vorgesehen, dass die mindestens eine erste Rippe 4 ein Rückenprofil 34 des Riemens 2 bildet. In der Figur 3 ist der Riemen 2 mit genau einer ersten Rippe 4 schematisch dargestellt. Grundsätzlich kann der Riemen 2 jedoch auch mehrere erste Rippen 4 aufweisen, und zwar zumindest in ähnlicher Weise, wie es in der Figur 2 dargestellt ist. In diesem Fall können die mehreren ersten Rippen 4 das Rückenprofil 34 des Riemens 2 bilden. Die Seite, an der die mindestens eine erste Rippe 4 angeordnet ist, wird als Rückseite 36 des Riemens 2 bezeichnet. Die gegenüberliegende Seite des Riemens 2 wird als Vorderseite 38 des Riemens 2 bezeichnet. Wie es aus der Figur 3 schematisch zu entnehmen ist, ist es für den Riemen 2 bevorzugt vorgesehen, dass der Riemen 2 ein Antriebsprofil 40 an der Vorderseite 38 des Riemens 2 aufweist. Das Antriebsprofil 40 des Riemens 2 weist mindestens eine in Riemenlängsrichtung L ausgebildete, zweite Rippe 42 auf. Eine derartige zweite Rippe 42 wird auch als Antriebsrippe 42 bezeichnet. Grundsätzlich kann der Riemen mehrere zweite Rippen 42 aufweisen, die sich jeweils in Riemenlängsrichtung L erstrecken, wobei die mehreren zweiten Rippen 42 das Antriebsprofil 40 bilden. Jede zweite Rippe 42 weist einen trapezförmigen Querschnitt auf, so dass jede zweite Rippe 42 eine zugehörige Auflageseite 44 und zwei sich von dieser Auflageseite 44 erstreckende Flanken 46 aufweist. Die zuletzt genannte Auflageseite 44 wird auch als Antriebsauflageseite 44 der jeweiligen zweiten Rippe 42 bezeichnet. Die zuletzt genannten Flanken 46 werden auch als Antriebsflanken 46 der jeweils zugehörigen zweiten Rippe 42 bezeichnet. Es ist bevorzugt vorgesehen, dass jede Auflageseite 44 einer zweiten Rippe 42 nicht nach innen gewölbt oder konkav ausgebildet ist. Vielmehr ist es vorgesehen, dass die Auflageseite 44 einer jeden zweiten Rippe 42 eben ausgebildet ist. Entsprechendes kann für die Flanken 46 einer jeden zweiten Rippe 42 gelten. Somit ist es besonders bevorzugt vorgesehen, dass die Flanken 46 einer jeden zweiten Rippe 42 nicht gewölbt, insbesondere nicht nach innen gewölbt, ausgebildet sind. Vielmehr ist es bevorzugt vorgesehen, dass jede Flanke 46 einer zweiten Rippe 42 eben ausgebildet ist. Der Querschnitt einer jeden zweiten Rippe 42 kann deshalb nach einem symmetrischen Trapez mit geraden Flankenseiten ausgebildet sein. Jede zweite Rippe 42 kann also nach Art einer bekannten Rippe für einen Keilriemen oder einem Rippenkeilriemen ausgebildet sein.

Darüber hinaus ist es bevorzugt vorgesehen, dass der Grundkörperabschnitt 12 zwischen der mindestens einen ersten Rippe 4 und der mindestens einen zweiten Rippe 42 angeordnet ist. Darüber hinaus ist bevorzugt vorgesehen, dass der Riemen 2 einstückig ausgebildet ist. Der Grundkörper 12, jede erste Rippe 4 und bevorzugt auch jede zweite Rippe 42 können deshalb ununterbrochen von dem gleichen Riemenmaterial gebildet sein.

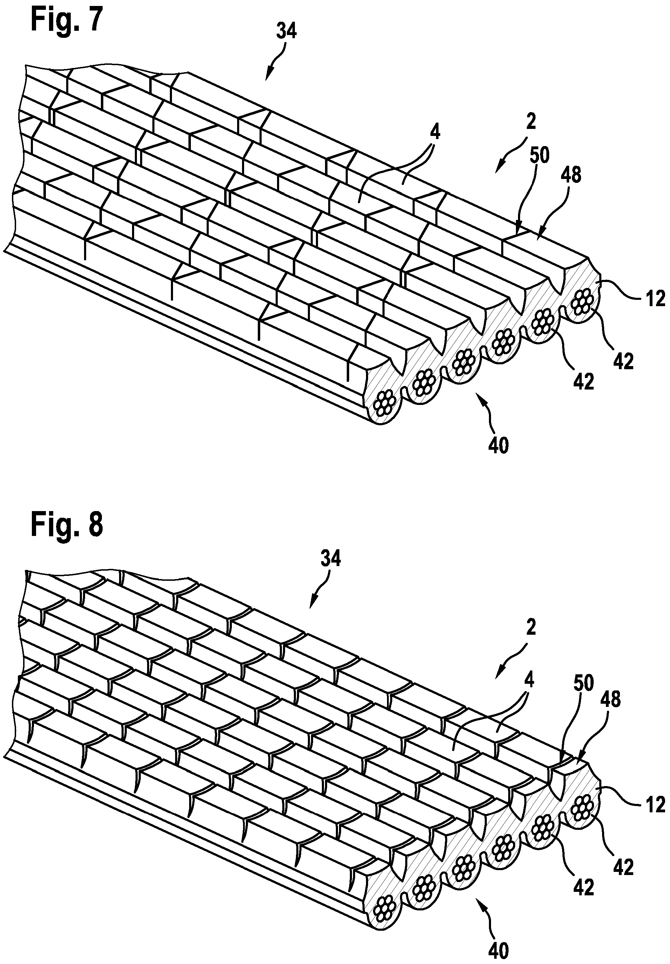

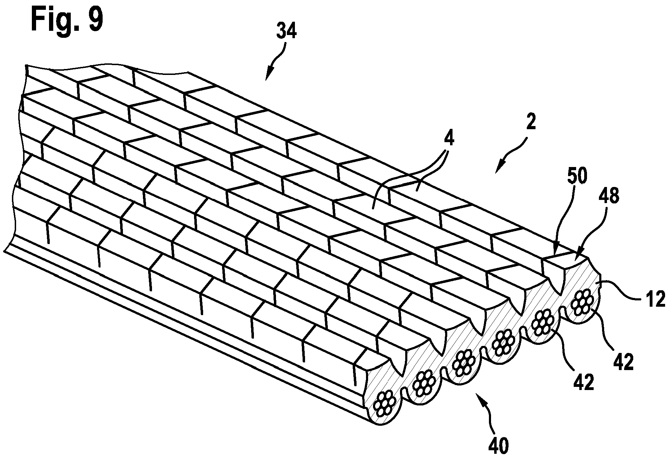

In jeder der Figuren 4 bis 9 ist eine vorteilhafte Ausgestaltung des Riemens 2 in einer schematischen Perspektivansicht gezeigt. Dabei weist jeder der Riemen 2 mehrere, erste Rippen 4 sowie mehrere, zweite Rippen 42 auf. Jede der ersten Rippen 4 ist an der Rückseite 36 des Riemens 2 angeordnet, so dass die mehreren ersten Rippen 4 das Rückenprofil 34 des jeweiligen Riemens 2 bilden. Jede der zweiten Rippe 46 ist an der Vorderseite 38 des Riemens 2 angeordnet. Die Mehrzahl der zweiten Rippen 42 bildet deshalb das Antriebsprofil 40 des Riemens 2. Außerdem ist es bevorzugt vorgesehen, dass jeder der Riemen 2 einen gemeinsamen Grundkörperabschnitt 12 aufweist.

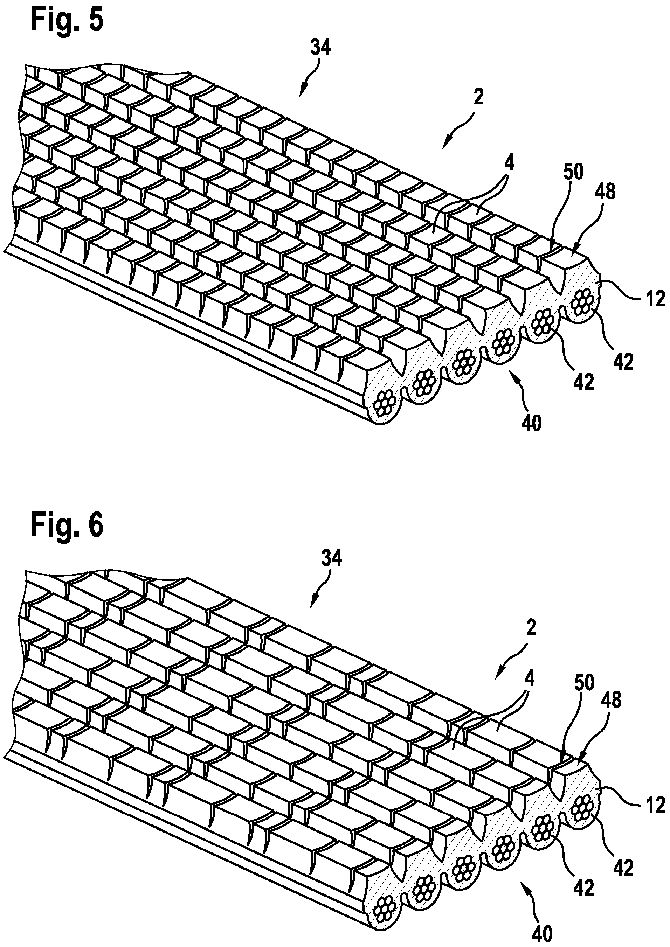

Darüber hinaus hat es sich als vorteilhaft erwiesen, wenn jede erste Rippe 4 als eine gezahnte erste Rippe 4 ausgebildet ist. Dies ist schematisch in den Figuren 5 bis 9 gezeigt. Eine gezahnte erste Rippe 4 kann dabei von einer Vielzahl von sogenannten Zähnen 48 und dazwischen jeweils entsprechenden Keilnuten 50 gebildet sein. Mit anderen Worten ist es bevorzugt vorgesehen, dass bei jeder gezahnten, ersten Rippe 4 Keilnuten 50 durch die Zähne 48 der jeweiligen ersten Rippe 4, oder umgekehrt, gebildet sind, wobei die Keilnuten 50 senkrecht oder schräg zur Riemenlängsrichtung L des Riemens 2 ausgerichtet sind. Der Abstand zwischen den einzelnen Keilnuten 50 kann gleich oder unregelmäßig oder nach einem vorbestimmten Muster ausgebildet sein. Sind mehrere erste Rippen 4 vorgesehen, können die Keilnuten 50 der mehreren ersten Rippen 4 fluchtend, und zwar in einer Richtung senkrecht oder schräg zur Riemenlängsrichtung L, ausgerichtet sein.

Ergänzend sei daraufhingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Riemen (2), aufweisend:
mindestens eine in Riemenlängsrichtung L ausgebildete Rippe (4),
wobei jede Rippe (4) einen trapezförmigen Querschnitt (6) aufweist, so dass jede Rippe (4) eine Auflageseite (8) und zwei sich von der Auflageseite (8) erstreckende Flanken (10) aufweist,
**dadurch gekennzeichnet, dass**
jede Flanke (10) nach innen gewölbt ausgebildet ist und
jede Auflageseite (8) nach innen gewölbt ausgebildet ist.

2. Riemen (2) nach dem vorhergehenden Anspruch, **dadurch gekennzeichnet, dass** der Riemen (2) als Keilriemen mit genau einer Rippe (4) ausgebildet ist.

3. Riemen (2) nach Anspruch 1, **dadurch gekennzeichnet, dass** der Riemen (2) mit mehreren Rippen (4) als Rippenkeilriemen ausgebildet ist.

4. Riemen (2) nach einem der vorhergehenden Ansprüche, **dadurch gekennzeichnet, dass**
die mindestens eine Rippe (4) ein Rückenprofil (34) an einer Rückseite (36) des Riemens (2) bildet,
wobei der Riemen (2) außerdem ein Antriebsprofil (40) an einer Vorderseite (38) des Riemens (2) aufweist, die gegenüber zu der Rückseite (36) des Riemens (2) angeordnet ist.

5. Riemen (2) nach einem der vorhergehenden Ansprüche, **dadurch gekennzeichnet, dass**
jede Flanke (10) eine maximale Wölbungstiefe (20), die als Flankenwölbungstiefe (20) bezeichnet wird, von mindestens 0,05 mm bis 0,2 mm aufweist.

6. Riemen (2) nach einem der vorhergehenden Ansprüche, **dadurch gekennzeichnet, dass**
jede Auflageseite (8) eine maximale Wölbungstiefe (28), die als Auflagewölbungstiefe (28) bezeichnet wird, von mindestens 0,05 mm bis 0,2 mm aufweist.

7. Riemen (2) nach dem vorhergehenden Anspruch, **dadurch gekennzeichnet, dass** die Flankenwölbungstiefe (20) und die Auflagewölbungstiefe (28) einer gemeinsamen Rippe (4) zumindest im Wesentlichen gleich sind.

8. Riemen (2) nach einem der vorhergehenden Ansprüche, **dadurch gekennzeichnet, dass**
die Wölbung einer jeden Flanke (10) einen Biegeradius, der als Flankenbiegeradius R1 bezeichnet ist, um eine Achse A1 parallel zur Riemenlängsrichtung L des Riemens (2) zwischen 1 cm und 300 cm, insbesondere zwischen 2 cm und 10 cm, aufweist.

9. Riemen (2) nach dem vorhergehenden Anspruch, **dadurch gekennzeichnet, dass** das Verhältnis von einer Höhe (18) der Flanken (10) zu dem Flankenbiegeradius R1 zwischen 0, 1 und 2 ist.

10. Riemen (2) nach einem der vorhergehenden Ansprüche, **dadurch gekennzeichnet, dass**
die Wölbung (28) einer jeden Auflageseite (8) einen Biegeradius R2, der als Auflagebiegeradius R2 bezeichnet ist, um eine Achse A2 parallel zur Riemenlängsrichtung L des Riemens (2) zwischen 1 cm und 300 cm, insbesondere 2 cm und 10 cm, aufweist.

11. Riemen (2) nach dem vorhergehenden Anspruch, **dadurch gekennzeichnet, dass** das Verhältnis von einer Breite (16) der Auflageseite (8) zu dem Auflagebiegeradius R2 zwischen 0, 1 und 2 ist.

12. Riemen (2) nach einem der vorhergehenden Ansprüche, **dadurch gekennzeichnet, dass**
jede Rippe (4) als gezahnte Rippe (4) ausgebildet ist.

13. Riemen (2) nach dem vorhergehenden Anspruch, **dadurch gekennzeichnet, dass** bei jeder gezahnten Rippe (4) Keilnuten (50) durch die Zähne (48) der Rippe (4) gebildet sind,
wobei die Keilnuten (50) senkrecht oder schräg zur Riemenlängsrichtung L des Riemens (2) ausgerichtet sind.

14. Riementrieb, aufweisend:
einen Riemen (2) nach einem der vorhergehenden Ansprüche,
eine Riemenscheibe, die teilweise von dem Riemen (2) umschlungen ist,
wobei die Riemenscheibe einen kreiszylindrischen Auflageringabschnitt aufweist,
der einen konstanten Durchmesser aufweist.

15. Riementrieb nach dem vorhergehenden Anspruch, **dadurch gekennzeichnet, dass** die Riemenscheibe zwei Bordscheiben aufweist, die zu gegenüberliegenden Stirnseiten des Auflageringabschnitts angeordnet sind, so dass jede Bordscheibe eine scheibenförmige Begrenzungsfläche bildet,
wobei jede der Begrenzungsfläche senkrecht oder mit einer konstanten Schrägung zur Drehaxialrichtung der Antriebscheibe ausgebildet ist.

## Claims

1. Belt (2), having:
at least one rib (4) which is configured in the belt longitudinal direction L,
each rib (4) having a trapezoidal cross section (6), with the result that each rib (4) has a supporting side (8) and two flanks (10) which extend from the supporting side (8),
**characterized in that**
each flank (10) is of inwardly curved configuration, and
each supporting side (8) is of inwardly curved configuration.

2. Belt (2) according to the preceding claim, **characterized in that**
the belt (2) is configured as a V-belt with precisely one rib (4).

3. Belt (2) according to Claim 1, **characterized in that** the belt (2) is configured with a plurality of ribs (4) as a V-ribbed belt.

4. Belt (2) according to one of the preceding claims, **characterized in that**
the at least one rib (4) forms a rear profile (34) on a rear side (36) of the belt (2),
the belt (2) having, moreover, a drive profile (40) on a front side (38) of the belt (2), which front side (38) is arranged opposite the rear side (36) of the belt (2).

5. Belt (2) according to one of the preceding claims, **characterized in that**
each flank (10) has a maximum curvature depth (20), which is called a flank curvature depth (20), of at least from 0.05 mm to 0.2 mm.

6. Belt (2) according to one of the preceding claims, **characterized in that**
each supporting side (8) has a maximum curvature depth (28), which is called a support curvature depth (28), of at least from 0.05 mm to 0.2 mm.

7. Belt (2) according to the preceding claim, **characterized in that**
the flank curvature depth (20) and the support curvature depth (28) of a common rib (4) are at least substantially identical.

8. Belt (2) according to one of the preceding claims, **characterized in that**
the curvature of each flank (10) has a bending radius, which is called a flank bending radius R1, about an axis A1 parallel to the belt longitudinal direction L of the belt (2) of between 1 cm and 300 cm, in particular of between 2 cm and 10 cm.

9. Belt (2) according to the preceding claim, **characterized in that**
the ratio of a height (18) of the flanks (10) to the flank bending radius R1 is between 0.1 and 2.

10. Belt (2) according to one of the preceding claims, **characterized in that**
the curvature (28) of each supporting side (8) has a bending radius R2, which is called a support bending radius R2, about an axis A2 parallel to the belt longitudinal direction L of the belt (2) of between 1 cm and 300 cm, in particular of between 2 cm and 10 cm.

11. Belt (2) according to the preceding claim, **characterized in that**
the ratio of a width (16) of the supporting side (8) to the support bending radius R2 is between 0.1 and 2.

12. Belt (2) according to one of the preceding claims, **characterized in that**
each rib (4) is configured as a toothed rib (4).

13. Belt (2) according to the preceding claim, **characterized in that**,
in the case of each toothed rib (4), keyways (50) are formed by way of the teeth (48) of the rib (4),
the keyways (50) being oriented perpendicularly or obliquely with respect to the belt longitudinal direction L of the belt (2).

14. Belt drive, having:
a belt (2) according to one of the preceding claims,
a pulley wheel which is wrapped around partially by the belt (2),
the pulley wheel having a circular-cylindrical supporting ring section which has a constant diameter.

15. Belt drive according to the preceding claim, **characterized in that**
the pulley wheel has two flanged discs which are arranged on different end sides of the supporting ring section, with the result that each flanged disc forms a disc-shaped bounding face,
each of the bounding faces being configured perpendicularly or with a constant inclination with respect to the rotational axial direction of the drive pulley.

## Revendications

1. Courroie (2), comprenant :
au moins une nervure (4) configurée en L dans la direction longitudinale de courroie,
chaque nervure (4) présentant une section transversale en forme de trapèze (6), de telle sorte que chaque nervure (4) présente un côté d'appui (8) et deux flancs (10) s'étendant à partir du côté d'appui (8), **caractérisée en ce que**
chaque flanc (10) est configuré sous forme cambrée vers l'intérieur et
chaque côté d'appui (8) est configuré sous forme cambrée vers l'intérieur.

2. Courroie (2) selon la revendication précédente, **caractérisée en ce que**
la courroie (2) est configurée en tant que courroie trapézoïdale avec exactement une nervure (4).

3. Courroie (2) selon la revendication 1, **caractérisée en ce que**
la courroie (2) est configurée avec plusieurs nervures (4) en tant que courroie trapézoïdale à nervures.

4. Courroie (2) selon l'une quelconque des revendications précédentes, **caractérisée en ce que** l'au moins une nervure (4) forme un profil de dos (34) sur un côté arrière (36) de la courroie (2),
la courroie (2) comprenant en outre un profil d'entraînement (40) sur un côté avant (38) de la courroie (2), qui est agencé à l'opposé du côté arrière (36) de la courroie (2).

5. Courroie (2) selon l'une quelconque des revendications précédentes, **caractérisée en ce que** chaque flanc (10) présente une profondeur de cambrure maximale (20), qui est nommée profondeur de cambrure de flanc (20), d'au moins 0,05 mm à 0,2 mm.

6. Courroie (2) selon l'une quelconque des revendications précédentes, **caractérisée en ce que** chaque côté d'appui (8) présente une profondeur de cambrure maximale (28), qui est nommée profondeur de cambrure d'appui (28), d'au moins 0,05 mm à 0,2 mm.

7. Courroie (2) selon la revendication précédente, **caractérisée en ce que**
la profondeur de cambrure de flanc (20) et la profondeur de cambrure d'appui (28) d'une nervure commune (4) sont au moins essentiellement identiques.

8. Courroie (2) selon l'une quelconque des revendications précédentes, **caractérisée en ce que** la cambrure de chaque flanc (10) présente un rayon de courbure, qui est nommé rayon de courbure de flanc R1, autour d'un axe A1 parallèle à la direction longitudinale de courroie L de la courroie (2) compris entre 1 cm et 300 cm, notamment entre 2 cm et 10 cm.

9. Courroie (2) selon la revendication précédente, **caractérisée en ce que**
le rapport d'une hauteur (18) des flancs (10) au rayon de courbure de flanc R1 est compris entre 0,1 et 2.

10. Courroie (2) selon l'une quelconque des revendications précédentes, **caractérisée en ce que** la cambrure (28) de chaque côté d'appui (8) présente un rayon de courbure R2, qui est nommé rayon de courbure d'appui R2, autour d'un axe A2 parallèle à la direction longitudinale de courroie L de la courroie (2) compris entre 1 cm et 300 cm, notamment entre 2 cm et 10 cm.

11. Courroie (2) selon la revendication précédente, **caractérisée en ce que**
le rapport d'une largeur (16) du côté d'appui (8) au rayon de courbure d'appui R2 est compris entre 0,1 et 2.

12. Courroie (2) selon l'une quelconque des revendications précédentes, **caractérisée en ce que** chaque nervure (4) est configurée en tant que nervure dentée (4).

13. Courroie (2) selon la revendication précédente, **caractérisée en ce que**
dans chaque nervure dentée (4), des rainures trapézoïdales (50) sont formées à travers les dents (48) de la nervure (4),
les rainures trapézoïdales (50) étant orientées perpendiculairement ou obliquement par rapport à la direction longitudinale de courroie L de la courroie (2) .

14. Transmission par courroie, comprenant :
une courroie (2) selon l'une quelconque des revendications précédentes,
une poulie de courroie, qui est entourée partiellement par la courroie (2),
la poulie de courroie présentant une section annulaire d'appui cylindrique circulaire qui présente un diamètre constant.

15. Transmission par courroie selon la revendication précédente, **caractérisée en ce que**
la poulie de courroie comprend deux disques de rebord, qui sont agencés sur des côtés frontaux opposés de la section annulaire d'appui, de telle sorte que chaque disque de rebord forme une surface de délimitation en forme de disque,
chaque surface de délimitation étant formée perpendiculairement ou avec une inclinaison constante par rapport à la direction axiale de rotation du disque d'entraînement.
